# EUROPEAN PATENT SPECIFICATION

(11) **EP 3 040 823 B1**
(45) Date of publication and mention of the grant of the patent: **27.09.2017**
(21) Application number: 15197938.2
(22) Date of filing: 04.12.2015
(51) Int. Cl.: G06F 3/041, G02F 1/1333, G09G 3/36

(54) **DISPLAY DEVICE AND DRIVING METHOD THEREOF**
ANZEIGEVORRICHTUNG UND ANSTEUERUNGSVERFAHREN DAFÜR
DISPOSITIF D'AFFICHAGE ET PROCEDE DE COMMANDE CORRESPONDANT

(30) Priority: 31.12.2014 KR 20140196073; 27.10.2015 KR 20150149077
(43) Date of publication of application: 06.07.2016
(73) Proprietor: LG Display Co., Ltd., Seoul 150-721 (KR)
(72) Inventor: KANG, Seong Kyu, 413-811 Paju-si, Gyeonggi-do (KR); KIM, Hoon Bae, 411-763 Goyang-si, Gyeonggi-do (KR); LEE, Sung Yub, 612-767 Busan (KR)
(74) Representative: Viering, Jentschura & Partner mbB Patent- und Rechtsanwälte

(56) References cited:
- WO-A1-2013/056472
- CN-U- 203 386 163
- US-A1- 2012 075 237
- US-A1- 2012 313 881
- US-A1- 2013 162 560
- US-A1- 2013 321 296

## Description

### BACKGROUND

### Field of the Invention

The present invention relates to a display device and a driving method thereof, and particularly, to a display device with a built-in touch panel and a driving method thereof.

### Discussion of the Related Art

Touch panels are a type of input device that is included in display devices such as liquid crystal display (LCD) devices, plasma display panels (PDPs), organic light emitting display device (OLED), and electrophoretic displays (EPDs), and enables a user to input information by directly touching a screen with a finger, a pen or the like while looking at the screen of the display device.

Particularly, the demand for display devices integrated with an in-cell touch screen, which include a plurality of built-in elements configuring the touch screen for slimming portable terminals such as smart phones and tablet personal computers (PCs), is recently increasing. Document US 2013/0321296 A1 discloses a display device with an integrated touch screen including a display panel including electrodes divided into a plurality of block type groups and a plurality of data lines; a display driver IC configured to apply a common voltage to the electrodes when a driving mode of the panel is a display driving mode.

Document WO 2013/056472 A1 discloses to eliminate the influence of display panel on the touch control signal by applying a shielding signal to the shielding electrode.

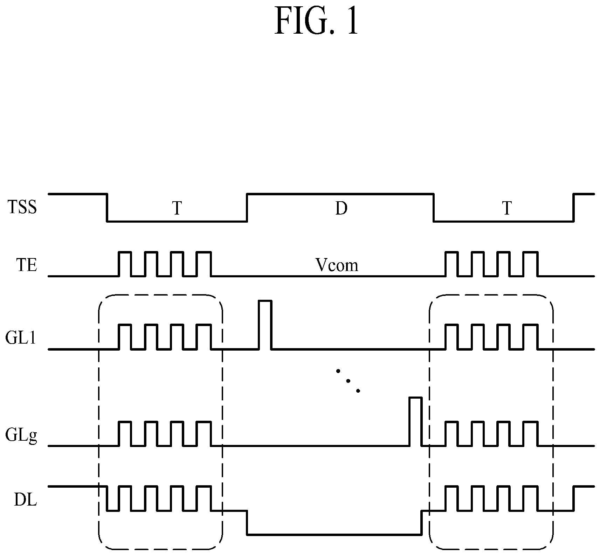

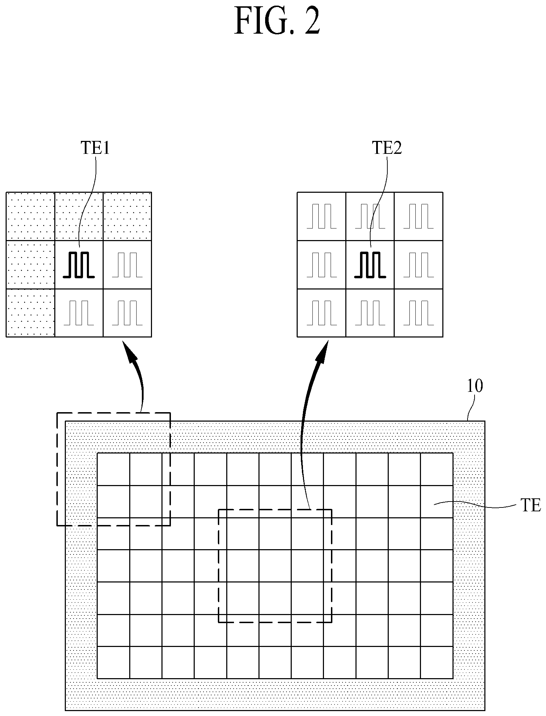

FIG. 1 is an exemplary diagram showing waveforms of various signals applied to a related art in-cell display device. FIG. 2 is an exemplary diagram illustrating a configuration of a panel applied to the related art in-cell display device.

In the related art in-cell display device, as shown in FIG. 1, an image display period D and a touch sensing period T are divided by a touch sync signal TSS.

During the image display period D, as shown in FIG. 1, a gate pulse is sequentially supplied to a plurality of gate lines GL1 to GLg, and a common voltage is supplied to a plurality of touch electrodes TE used as a common electrode. Data voltages are respectively supplied to a plurality of data lines DL.

During the touch sensing period T, a touch signal is supplied to the touch electrodes TE, and thus, a touch is sensed. In this case, as shown in FIG. 1, touch assistance signals which are the same as the touch signal are supplied to the gate lines GL1 to GLg and the data lines DL.

By using the above-described driving method, loads of the touch electrodes TE are reduced, and touch sensitivity is enhanced.

For example, during the touch sensing period T, the touch assistance signals having the same level and phase as those of the touch signal is supplied to the gate lines GL1 to GLg and the data lines DL, and thus, a parasitic capacitance is not generated between the touch electrodes and the gate lines GL1 to GLg and data lines DL. Accordingly, touch sensitivity is enhanced.

However, in a case where the above-described driving method is applied, a touch sensor disposed at an outer portion of the panel has a condition which differs from that of a touch sensor disposed inside the panel.

For example, in FIG. 2, seven touch electrodes disposed at a left outer portion of a panel 10, seven touch electrodes disposed at a right outer portion of the panel 10, eleven touch electrodes disposed at an upper outer portion of the panel 10, and eleven touch electrodes (hereinafter simply referred to as an edge touch electrode TE1) disposed at a lower outer portion of the panel 10 are not adjacent to another touch electrode in at least one of up, down, left, and right directions.

However, in FIG. 2, a touch electrode (hereinafter simply referred to as a center touch electrode TE2 disposed inside the panel 10 is adjacent to other touch electrodes in all directions.

Moreover, an arrangement structure of data lines and gate lines which affect the edge touch electrode TE1 differs from an arrangement structure of data lines and gate lines which affect the center touch electrode TE2.

Therefore, a touch signal supplied to the edge touch electrode TE1 has characteristic different from that of a touch signal supplied to the center touch electrode TE2 even when the touch signal is supplied to the edge touch electrode TE1 during the touch sensing period T and the touch assistance signals corresponding to the touch signal are supplied to the data lines and the gate lines.

Particularly, various lines such as a common voltage supply line, a high voltage supply line, and an electrostatic discharge (ESD) line are disposed outside (e.g., close or adjacent to) the edge touch electrode TE1, namely, in a non-display area.

Therefore, a parasitic capacitance is generated between the lines and the edge touch electrode TE1 and affects a touch performance of the edge touch electrode TE1.

For this reason, in comparison with the center touch electrode TE1, a touch sensitivity and a characteristic of the edge touch electrode TE1 are reduced, and a touch sensing ability and a touch performance of a display device are affected.

### SUMMARY

Accordingly, the present invention is directed to provide a display device and a driving method thereof that substantially obviate one or more problems due to limitations and disadvantages of the related art.

An aspect of the present invention is directed to provide a display device according to claim 1, in which a touch assistance line to which a touch assistance signal having the same phase and potential difference as those of a touch signal is supplied during a touch sensing period is disposed in a panel, and a driving method according to claim 9.

Additional advantages and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these and other advantages and in accordance with the purpose of the invention, as embodied and broadly described herein, there is provided a display device including: a panel in which a plurality of touch electrodes are disposed in a display area, and a touch assistance line, to which a touch assistance signal having the same phase and potential difference as a phase and a potential difference of a touch signal supplied to the plurality of touch electrodes is supplied during a touch sensing period, is disposed in a non-display area outside the display area; a touch sensing unit configured to supply a common voltage to the plurality of touch electrodes during an image display period and supply the touch signal to the plurality of touch electrodes during the touch sensing period to determine whether the panel is touched; and a touch assistance signal supply unit configured to supply a touch assistance signal to the touch assistance line during the touch sensing period.

In one or more embodiments, during the touch sensing period, the touch assistance signal having the same phase and potential difference as the phase and potential difference of the touch signal is supplied to a plurality of gate lines and a plurality of data lines which are disposed in the panel.

In one or more embodiments, the touch assistance line surrounds the display area.

In one or more embodiments, the touch assistance line is configured to operate, during the image display period, as one of a common voltage supply line to which the common voltage is supplied, a gate low voltage supply line to which a gate low voltage is supplied, a gate high voltage supply line to which a gate high voltage is supplied, an electrostatic discharge (ESD) line which is disposed for preventing static electricity, and a line which is independently provided for supplying the touch assistance signal.

In one or more embodiments, the display device further comprises a gate driver and a data driver, wherein, the gate driver is configured to sequentially supply a gate pulse to a plurality of gate lines disposed in the panel during the image display period, and to receive the touch assistance signal from the touch assistance signal supply unit and supply the touch assistance signal to the plurality of gate lines during the touch sensing period, and the data driver is configured to respectively supply data voltages to a plurality of data lines disposed in the panel during the image display period, and to receive the touch assistance signal from the touch assistance signal supply unit and supply the touch assistance signal to the plurality of data lines during the touch sensing period.

In one or more embodiments, the display device further comprises an electrostatic discharge (ESD) line for preventing static electricity that is disposed in the non-display area, and the touch assistance line is disposed between the ESD line and the display area.

In one or more embodiments, the touch assistance line is a line which is independently provided for supplying the touch assistance signal.

In one or more embodiments, a level of a direct current (DC) voltage which is supplied to the touch assistance line during the image display period is the same as a level of a common voltage which is supplied to the touch electrodes during the image display period. In one or more embodiments, a low level, a high level, and a phase of the touch assistance signal which is supplied to the touch assistance line during the touch sensing period are the same as a low level, a high level, and a phase of the touch signal which is supplied to the touch electrodes during the touch sensing period.

In another aspect of the present invention, there is provided a method of driving a display device including: during an image display period, supplying a common voltage to a plurality of touch electrodes disposed in a display area of a panel to display an image in the panel; and during a touch sensing period, supplying a touch signal to the plurality of touch electrodes and supplying a touch assistance signal, having the same phase and potential difference as a phase and a potential difference of the touch signal, to a touch assistance line, disposed in a non-display area outside the display area, and a plurality of gate lines and a plurality of data lines which are included in the panel.

In one or more embodiments, during the image display period, one of the common voltage, a gate low voltage of a gate pulse supplied to the plurality of gate lines, a gate high voltage of the gate pulse, an electrostatic discharge (ESD) signal, and a signal which is the same as the common voltage is supplied to the touch assistance line.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:
FIG. 1 is an exemplary diagram showing waveforms of various signals applied to a related art in-cell display device;
FIG. 2 is an exemplary diagram illustrating a configuration of a panel applied to the related art in-cell display device;
FIG. 3 is an exemplary diagram illustrating a configuration of a display device according to an embodiment of the present invention;
FIG. 4 is an exemplary diagram illustrating a method of supplying a touch signal and a touch assistance signal to a display device according to an embodiment of the present invention;
FIG. 5 is an exemplary diagram showing waveforms of various signals applied to a display device according to an embodiment of the present invention;
FIG. 6 is an exemplary diagram illustrating a configuration of a panel applied to a display device according to another embodiment of the present invention; and
FIG. 7 is an exemplary diagram showing waveforms of various signals applied to a display device according to another embodiment of the present invention.

### DETAILED DESCRIPTION OF THE INVENTION

Reference will now be made in detail to the exemplary embodiments of the present invention, examples of which are illustrated in the accompanying drawings. Wherever possible, the same reference numbers will be used throughout the drawings to refer to the same or like parts.

Hereinafter, embodiments of the present invention will be described in detail with reference to the accompanying drawings. For convenience of a description, an LCD device will be described below as an example of the present invention, but the present invention is not limited thereto. That is, the present invention may be applied various display devices that display an image by using a common electrode and a common voltage.

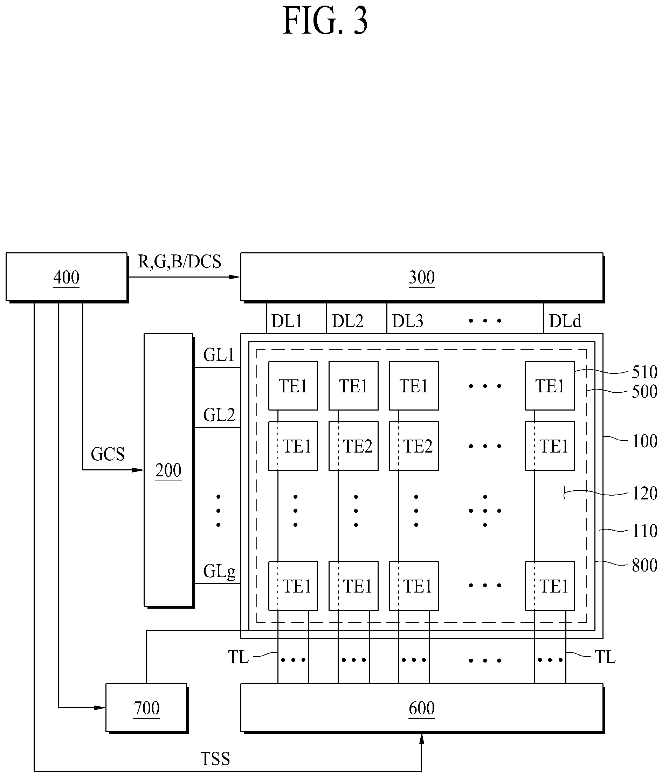

FIG. 3 is an exemplary diagram illustrating a configuration of a display device according to an embodiment of the present invention.

As illustrated in FIG. 3, the display device according to an embodiment of the present invention includes: a panel 100 in which a plurality of touch electrodes 510 are disposed in a display area 120, and a touch assistance line 800, to which a touch assistance signal having the same phase and potential difference as those of a touch signal supplied to the touch electrodes 510 is supplied during a touch sensing period, is disposed in a non-display area 110 disposed outside the display area 120; a touch sensing unit 600 that supplies a common voltage to the touch electrodes 510 during an image display period and supplies the touch signal to the touch electrodes 510 during the touch sensing period to determine whether the panel 100 is touched; and a touch assistance signal supply unit 700 that supplies an assistance signal, which is the same as the touch signal, to the touch assistance line 800 during the touch sensing period. Here, during the touch sensing period, the assistance signal which is the same as the touch signal may be supplied to a plurality of gate lines GL1 to GLg and a plurality of data lines DL1 to DLd which are disposed in the panel 100.

The panel 100 may include a color filter (CF) substrate, a thin film transistor (TFT) substrate where the gate lines and the data lines are provided, and a liquid crystal that is injected between the CF substrate and the TFT substrate.

A touch panel 500 including the touch electrodes 510 may be built into the panel 100. Here, each of the touch electrodes 510 configuring the touch panel 500 may act as a common electrode, which receives a common voltage, and a touch electrode which receives a touch signal.

For example, during an image display period, the common voltage may be supplied to the touch electrodes 510, data voltages may be respectively supplied to a plurality of pixel electrodes, which are respectively provided in a plurality of pixels, through the data lines, and the gate pulse may be supplied to the gate lines. When the gate pulse is supplied, the liquid crystal may be driven by a difference voltage between the common voltage and a data voltage supplied to each of the pixel electrodes. A transmittance of the liquid crystal may be changed according to the difference voltage, and thus, an image may be displayed by the panel 100.

During the touch sensing period, the touch signal may be supplied to the touch electrodes 510. In this case, by using a plurality of sensing signals respectively received from the touch electrodes 510, the touch sensing unit 600 may determine whether there is a touch or detect a touched position.

In order to perform the above-described function, the TFT substrate may include the gate lines GL1 to GLg, the data lines DL1 to DLd, the touch electrodes 510, and the pixel electrodes (not shown).

Particularly, the touch electrodes 510 may be disposed in the display area 120 which is an area where an image is displayed in the panel 100.

The CF substrate may include a red color filter, a green color filter, and a blue color filter that divide a red pixel, a green pixel, and a blue pixel.

As described above, the touch panel 500 may include the touch electrodes 510.

The touch electrodes 510 may be disposed in the display area 120.

Each of the touch electrodes 510 may be connected to the touch sensing unit 600 through a touch electrode line TL.

During the touch sensing period, the touch signal may be supplied to the touch electrodes 510. During the image display period, the common voltage may be supplied to the touch electrodes 510.

The touch electrodes 510 may be built into the panel 100 in an in-cell type.

Among the touch electrodes 510, as illustrated in FIG. 3, a touch electrode disposed at an edge of the display area 120 may be referred to as an edge touch electrode TE 1.

Moreover, among the touch electrodes 510, a touch electrode disposed at the inside of the display area may be referred to as a center touch electrode TE2.

The edge touch electrode TE1 may not be adjacent to another touch electrode in at least one of up, down, left, and right directions. The center touch electrode TE2 may be adjacent to other touch electrodes in each of up, down, left and right directions. In other words, the center touch electrode may be surrounded by other touch electrodes.

A controller 400 may receive a plurality of timing signals, such as a data enable signal DE, a dot clock CLK, etc., from an external system to generate a plurality of control signals GCS and DCS for controlling operation timings of a data driver 300 and a gate driver 200. Also, the controller 400 may realign input video data received from the external system to output realigned image data to the data driver 300.

Moreover, the controller 400 may generate a control signal (for example, a touch sync signal TSS) for controlling operation timings of an input and an output of the touch sensing unit 600 and transfer the controls signal to the touch sensing unit 600.

The touch sensing unit 600 may distinguish the image display period and the touch sensing period according to the touch sync signal TSS.

Moreover, the controller 400 may generate a control signal for controlling the touch assistance signal supply unit 700 and transfer the control signal to the touch assistance signal supply unit 700.

The touch assistance signal supply unit 700 may generate the touch assistance signal and transfer the touch assistance signal to the touch assistance line 800 according to the control signal.

The touch assistance signal supply unit 700 may generate the touch assistance signal and transfer the touch assistance signal to the touch assistance line 800 according to the control signal transferred from the controller 400.

The touch assistance signal may have the same phase and potential difference as those of the touch signal. The touch assistance signal supply unit 700 may supply the touch assistance signal to the gate driver 200 and the data driver 300.

As described above, a phase of the touch assistance signal should be the same as that of the touch signal.

Moreover, a high level and a low level of the touch assistance signal may not be the same as those of the touch signal, but a potential difference that is a difference value between the high level and the low level of the touch assistance signal should be the same as a potential difference that is a difference value between a high level and a low level of the touch signal.

For example, when the high level of the touch signal is 8 V and the low level of the touch signal is 2 V, the potential difference of the touch signal may be 6 V. In this case, the high level of the touch assistance signal supplied to the touch assistance line 800 may be 27 V, and the low level of the touch assistance signal may be 21 V. Therefore, the potential difference of the touch assistance signal supplied to the touch assistance line 800 and the potential difference of the touch signal may have the same value (for example, a voltage of 6 V).

Moreover, when the high level of the touch assistance signal supplied to the gate line through the gate driver 200 is 27 V and the low level of the touch assistance signal is 21 V, the potential difference of the touch signal may be 6 V. In this case, the high level of the touch assistance signal supplied to the touch assistance line 800 may be 6.3 V, and the low level of the touch assistance signal may be 0.3 V. Therefore, the potential difference of the touch assistance signal supplied to the gate line and the potential difference of the touch assistance signal supplied to the touch assistance line 800 may have the same value (for example, a voltage of 6 V).

To provide an additional description, the phase of the touch assistance signal should be the same as that of the touch signal, and a potential difference that is a difference value between the high level and the low level of the touch assistance signal should be the same as a potential difference that is a difference value between a high level and a low level of the touch signal.

Moreover, high levels and low levels of the touch assistance signals respectively supplied to the gate line, the data line, and the touch assistance line may be the same or may differ. Also, if the touch assistance line is provided in plurality, phases of touch assistance signals supplied to the plurality of touch assistance lines should be the same, but high levels and low levels of the touch assistance signals may not be the same.

During the image display period, the data driver 300 may convert image data, input from the controller 400, into analog data voltages and may respectively supply data voltages for one horizontal line to the data lines at every one horizontal period where the gate pulse is supplied to one gate line. For example, the data driver 300 may convert the image data into the data voltages by using gamma voltages supplied from a gamma voltage generator (not shown), and then may respectively output the data voltages to the data lines during the image display period.

The data driver 300 may supply the touch assistance signal to the data lines during the touch sensing period.

In this case, the data driver 300 may autonomously generate the touch assistance signal and supply the touch assistance signal to the data lines.

Moreover, the data driver 300 may supply the touch assistance signal, supplied from the touch assistance signal supply unit 700, to the data lines. In this case, the data driver 300 may include a data switch. The data switch may connect the touch assistance signal supply unit 700 or a data voltage output unit, which outputs the data voltages, to a corresponding data line.

The gate driver 200 may shift a gate start pulse transferred from the controller 400 according to a gate shift clock to sequentially supply the gate pulse having a gate high voltage VGH to the gate lines GL1 to GLg.

Moreover, the gate driver 200 may supply a gate low voltage VGL to the gate lines GL1 to GLg during the other period where the gate pulse is not supplied.

The gate driver 200 may supply the touch assistance signal to the gate lines during the touch sensing period.

In this case, the gate driver 200 may autonomously generate the touch assistance signal and supply the touch assistance signal to the gate lines.

Moreover, the gate driver 200 may supply the touch assistance signal, supplied from the touch assistance signal supply unit 700, to the gate lines. In this case, the gate driver 200 may include a gate switch. The gate switch may connect the touch assistance signal supply unit 700 or a gate pulse output unit, which outputs the gate pulse, to a corresponding gate line.

Hereinabove, the data driver 300, the gate driver 200, and the controller 400 have been described as being separately provided. However, at least one of the data driver 300 and the gate driver 200 may be integrated into the controller 400.

The touch sensing unit 600 may determine whether the panel 100 is touched and detect a touched position by using the sensing signals respectively received from the touch electrodes 510.

To this end, when the touch sensing period arrives, the touch sensing unit 600 may transfer the touch signal to the touch electrodes 510.

In this case, the touch sensing unit 600 may determine whether the panel 100 is touched and detect a touched position by using the sensing signals respectively received from the touch electrodes 510.

Moreover, the touch sensing unit 600 may supply the common voltage to the touch electrodes 510 during the image display period.

To this end, the touch sensing unit 600 may connect the touch electrode line TL, connected to the touch electrode 510, to a common voltage supply unit which supplies the common voltage or a touch signal supply unit which supplies the touch signal.

The touch signal supply unit and the common voltage supply unit may be included in the touch sensing unit 600 or may be provided independently from the touch sensing unit 600.

Moreover, the common voltage may be supplied to the touch electrodes 510 via another path without passing through the touch sensing unit 600.

The touch sensing unit 600 may be included in the controller 400 or the data driver 300.

The touch assistance line 800 may be disposed in the non-display area 110 and may surround the display area 120.

During the image display period, the touch assistance line 800 may be at least one of a common voltage supply line through which the common voltage is supplied to the touch electrodes, a gate low voltage supply line to which the gate low voltage VGL is supplied, a gate high voltage supply line to which the gate high voltage VGH is supplied, and an ESD line which is disposed for preventing static electricity.

Therefore, a separate design and process are not needed for disposing the touch assistance line 800 in the panel 100.

During the image display period, one selected from the common voltage, the gate low voltage of the gate pulse supplied to the gate line, the gate high voltage of the gate pulse, and an ESD signal may be supplied to the touch assistance line 800.

However, the touch assistance line 800 may be independently disposed in the non-display area 110 for the purpose of receiving only the touch assistance signal during the touch sensing period. In this case, as illustrated in FIG. 3, the touch assistance line 800 may not be connected to elements which are disposed in the non-display area 110 or the display area 120.

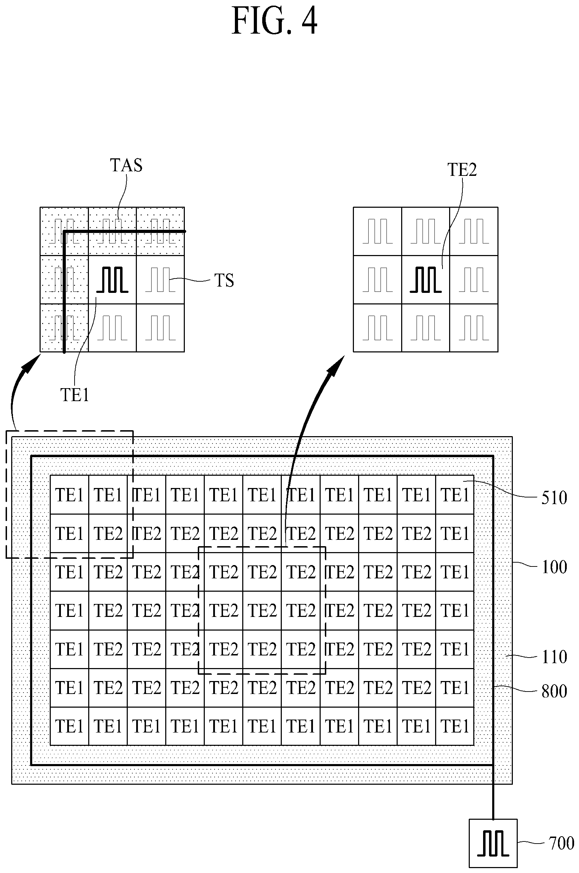

FIG. 4 is an exemplary diagram illustrating a method of supplying a touch signal and a touch assistance signal to a display device according to an embodiment of the present invention.

In the display device according to an embodiment of the present invention, the image display period and the touch sensing period may be divided by the touch sync signal.

During the image display period, the gate pulse may be sequentially supplied to the gate lines GL1 to GLg, and the common voltage may be supplied to the touch electrodes 510 used as the common electrodes. In this case, the data voltages may be respectively supplied to the data lines DL1 to DLd.

During the touch sensing period, as illustrated in FIG. 4, the touch signal TS may be supplied to the touch electrodes 510, and thus, a touch may be sensed. In this case, a plurality of the touch assistance signals TAS may be supplied to the gate lines GL1 to GLg and the data lines DL1 to DLd. Also, the touch assistance signal TAS may be supplied to the touch assistance line 800.

According to the above-described driving method, loads of the touch electrodes 510 are reduced, and thus, touch sensitivity is enhanced.

For example, during the touch sensing period, the touch assistance signal TAS may be supplied to the gate lines GL1 to GLg and the data lines DL1 to DLd, and thus, a parasitic capacitance is not generated between the touch electrodes 510 and the gate lines GL1 to GLg and data lines DL. Accordingly, touch sensitivity is enhanced.

Particularly, according to the present embodiment, the touch assistance signal TAS may be supplied to the touch assistance line 800, which is disposed in the non-display area 100 and surrounds the touch electrodes 510, during the touch sensing period.

For example, in FIG. 4, the touch assistance line 800 may be disposed outside seven edge touch electrodes TE1 disposed at a left outer portion of the panel 100, seven edge touch electrodes TE1 disposed at a right outer portion of the panel 100, eleven edge touch electrodes TE1 disposed at an upper outer portion of the panel 100, and eleven edge touch electrodes TE1 disposed at a lower outer portion of the panel 100.

In this case, during the touch sensing period, the touch assistance signal may be supplied to a plurality of data lines and a plurality of gate lines which are disposed in an area where the center touch electrodes TE2 are disposed, and the touch assistance signal may be supplied to the touch assistance line 800 disposed near the edge touch electrodes TE1.

Therefore, a load applied to the edge touch electrodes TE1 and a load applied to the center touch electrodes TE2 may have the same value or a similar value.

For example, when the touch assistance signal TAS having the same phase and potential difference as those of the touch signal TS is applied to the data lines, the gate lines, and the touch assistance line 800, the edge touch electrodes TE1 and the center touch electrodes TE2 may have an equivalent potential. Therefore, a load applied to the touch electrodes may become 0, thereby removing an influence of a parasitic capacitance.

Accordingly, touch sensitivity and touch performance are enhanced.

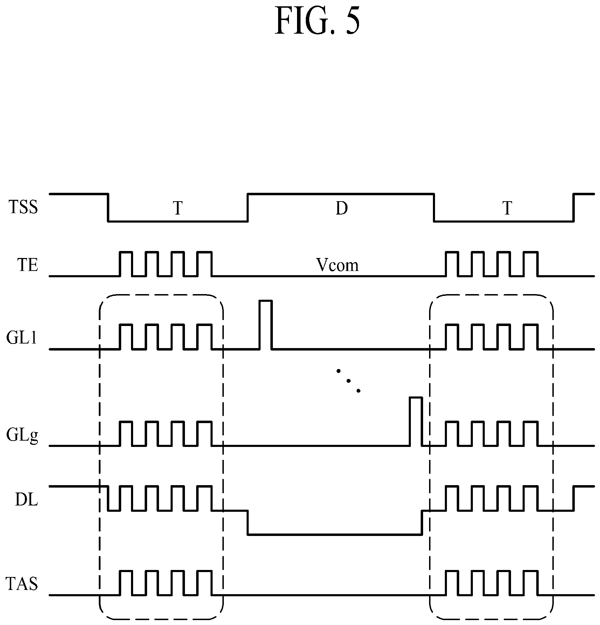

FIG. 5 is an exemplary diagram showing waveforms of various signals applied to a display device according to an embodiment of the present invention. A method of driving the display device according to an embodiment of the present invention will be described in detail with reference to FIG. 5. In the display device according to the embodiment of the present invention, as shown in FIG. 5, an image display period D and a touch sensing period T may be divided by a touch sync signal TSS.

First, during the image display period D, the common voltage may be supplied to the touch electrodes 510 disposed in the display area 120 of the panel 100, and thus, an image may be displayed by the panel 100.

In this case, a data voltage may be supplied to a pixel electrode, included in each of the pixels, through a corresponding data line DL, and the gate pulse may be supplied to a corresponding gate line GL.

When the gate pulse is supplied, the liquid crystal may be driven by a difference voltage between the common voltage and the data voltage supplied to the pixel electrode. A transmittance of the liquid crystal may be changed according to the difference voltage, and thus, an image may be displayed by the panel 100.

Second, during the touch sensing period T, the touch signal may be supplied to the touch electrodes (TE) 510.

In this case, the touch assistance signal TAS having the same phase and potential difference as those of the touch signal TS may be supplied to the touch assistance line 800 disposed in the non-display area 110 outside the display area 120, the gate lines GL1 to GLg included in the panel 100, and the data lines DL included in the panel 100.

Features of the present invention will be briefly described below.

In the display device according to the present embodiment, the touch assistance signal having the same phase and potential difference as those of the touch signal is supplied to the gate lines and the data lines, and to a touch assistance line disposed close to or adjacent edge touch electrodes, during the touch sensing period, and thus, characteristics of the edge touch electrodes disposed at an outer portion of the panel are improved.

As described in the background, in the related art display device, the number of touch electrodes disposed near the edge touch electrode TE1 is small in comparison with the center touch electrode TE2. In this case, a characteristic of the center touch electrode TE2 differs from that of the edge touch electrode TE1.

To solve such a problem, in the present embodiment, the touch assistance line 800 to which the touch assistance signal is supplied during the touch sensing period may be disposed in the non-display area 110 of the panel 100. The touch assistance signal is supplied to the touch assistance line during the touch sensing period, and thus, a characteristic of the edge touch electrode TE1 is the same as or similar to that of the center touch electrode TE2.

For example, when the touch assistance signal having the same form as that of the touch signal is applied to the data lines, the gate lines, and the touch assistance line 800, the touch electrodes have an equivalent potential, and a load theoretically becomes 0, thereby removing an influence of a parasitic capacitance.

Accordingly, touch sensitivity and touch performance are enhanced.

The touch assistance line may use one selected from the common voltage supply line to which the common voltage is supplied, the gate low voltage supply line to which the gate low voltage VGL is supplied, the gate high voltage supply line to which the gate high voltage VGH is supplied, and the ESD line which is connected to a ground or an electrostatic discharge (ESD) circuit for preventing static electricity.

Moreover, the touch assistance line 800 may be provided for the purpose of receiving only the touch assistance signal during the touch sensing period.

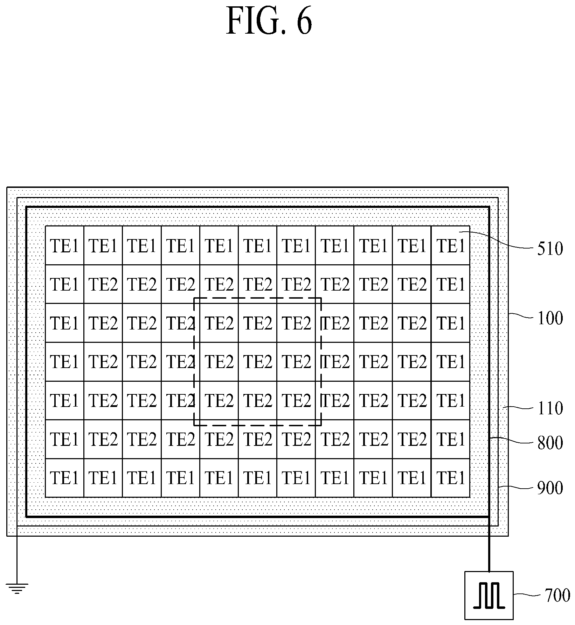

FIG. 6 is an exemplary diagram illustrating a configuration of a panel applied to a display device according to another embodiment of the present invention.

Generally, an ESD line may be disposed in the non-display area 110, for preventing static electricity. The ESD line may be connected to a ground GND. In this case, a DC voltage of 0 V may be supplied to the ESD line.

Since the ESD line is disposed outside the display area, a parasitic capacitance occurs between the edge touch electrodes TE1 and the ESD line, and for this reason, touch performance is degraded.

To solve such a problem, in the panel applied to the display device according to another embodiment of the present invention, as illustrated in FIG. 6, the touch assistance line 800 to which the touch assistance signal having the same phase and potential difference as those of the touch signal supplied to the touch electrodes 510 is supplied during a touch sensing period may be disposed between an ESD line 900 and the edge touch electrodes TE1.

The touch assistance line 800 may perform the same function as that of the touch assistance line 800 descried above with reference to FIGS. 3 to 5.

Therefore, the touch assistance line 800 illustrated in FIG. 6 may be at least one of a common voltage supply line to which the common voltage is supplied, a gate low voltage supply line to which the gate low voltage VGL is supplied, and a gate high voltage supply line to which the gate high voltage VGH is supplied. Also, the touch assistance line 800 may be independently disposed in the non-display area 110 for the purpose of receiving only the touch assistance signal during the touch sensing period.

The touch assistance signal TAS may be supplied to the touch assistance line 800 during the touch sensing period. In this case, due to the touch assistance line 800, a parasitic capacitance does not occur between the edge touch electrodes TE1 and the ESD line 900 during the touch sensing period.

Therefore, a characteristic of the edge touch electrodes TE1 is the same as or similar to that of the center touch electrodes TE2. Accordingly, a touch sensitivity and a touch performance of the display device are enhanced.

To provide an additional description, in the embodiment described above with reference to FIGS. 3 to 5, the ESD line may become the touch assistance line 800.

However, the ESD line 900 included in the panel 100 illustrated in FIG. 6 may be used for only preventing static electricity. In this case, the touch assistance line 800 to which the touch assistance signal is supplied during the touch sensing period may be disposed between the ESD line 900 and the display area 120.

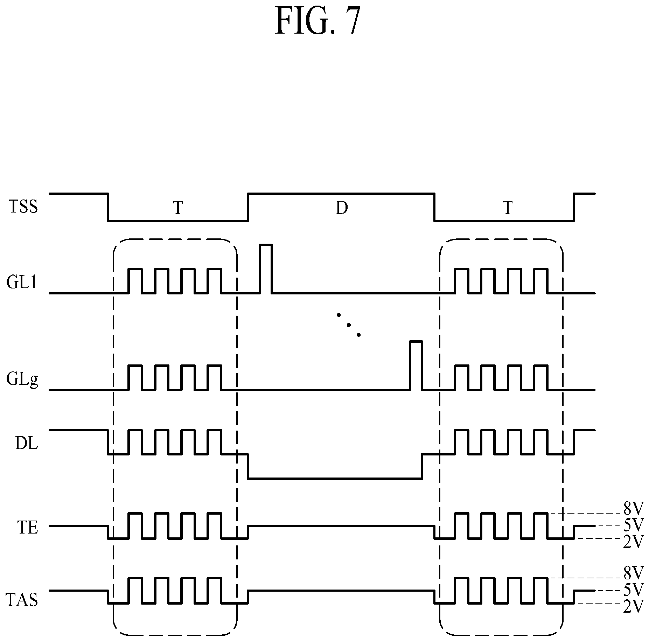

FIG. 7 is an exemplary diagram showing waveforms of various signals applied to a display device according to another embodiment of the present invention.

As described above, the touch assistance line 800 may be disposed in the non-display area 110 for the purpose of receiving only the touch assistance signal during the touch sensing period.

In this case, a common voltage (for example, 5 V) may be supplied to the touch electrode 510 during the image display period, and during the touch sensing period, the touch signal which swings between 2 V and 8 V may be supplied to the touch electrode 510. Therefore, when the touch sensing period starts after the image display period, a voltage supplied to the touch electrode 510 may be shifted from 5 V to 2 V.

The touch assistance line 800 may be connected to the ground during the image display period. Therefore, during the image display period, a voltage of 0 V may be supplied to the touch assistance line 800. When the touch sensing period arrives after the image display period, a voltage supplied to the touch assistance line 800 may be shifted from 0 V to 2 V. Also, during the touch sensing period, the touch assistance signal which swings between 2 V and 8 V may be supplied to the touch assistance line 800.

As described above, during the touch sensing period, the touch signal supplied to the touch electrode 510 may swing between 2 V and 8 V, and moreover, the touch assistance signal supplied to the touch assistance line 800 may swing between 2 V and 8 V.

However, when the touch sensing period starts, a difference occurs between a voltage supplied to the touch electrode 510 and a voltage supplied to the touch assistance line 800, causing degradation in touch performance. For example, when the touch sensing period starts, a voltage supplied to the touch electrode 510 may be shifted from 5 V to 2 V, and a voltage supplied to the touch assistance line 800 may be shifted from 0 V to 2 V. Although the difference between the voltages occurs during a short period after the touch sensing period starts, touch performance is degraded due to the difference between the voltages.

Therefore, according to the present embodiment, instead of connecting the touch assistance line 800 to the ground during the image display period, as shown in FIG. 7, a voltage (for example, 5 V) having the same level as that of the common voltage Vcom may be supplied to the touch assistance line 800 during the image display period. Also, according to the present embodiment, the touch assistance signal having the same voltage (for example, a voltage that swings between 2 V and 8 V) as that of the touch signal may be supplied to the touch assistance line 800 during the touch sensing period.

To provide an additional description, the touch signal may be supplied to the touch electrode 510 during the touch sensing period, and during the image display period, the common voltage Vcom that is a DC voltage may be supplied to the touch electrode 510. Since the touch assistance line 800 is disposed in the non-display area 110, the touch assistance line 800 is irrelevant to an output of an image. Therefore, an arbitrary voltage which is supplied to the touch assistance line 800 during the image display period does not affect an output of an image. However, when the image display period ends and the touch sensing period starts, a difference occurs between an initial condition, where the touch assistance signal is supplied, and an initial condition where the touch signal is supplied. The difference affects touch performance. Therefore, in the present embodiment, as shown in FIG. 7, a signal supplied to the touch assistance line 800 may be the same as a signal supplied to the touch electrode 510. Accordingly, a level of a DC voltage which is supplied to the touch assistance line 800 during the image display period may be the same as that of the common voltage Vcom which is supplied to the touch electrode 510 during the image display period. Also, a low level, a high level, and a phase of the touch assistance signal TAS which is supplied to the touch assistance line 800 during the touch sensing period may be the same as those of the touch signal which is supplied to the touch electrode 510 during the touch sensing period.

The above-described details may be applied to the embodiments described above with reference to FIGS. 2 to 6.

According to the embodiments of the present invention, the touch assistance signal having the same phase and potential difference as those of the touch signal is supplied to the touch assistance line during the touch sensing period, and thus, a characteristic of the edge touch electrode is the same as or similar to that of the center touch electrode.

Accordingly, a touch sensitivity and a touch performance of the display device are enhanced.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A display device comprising:
a panel (100) in which a plurality of touch electrodes (510) are disposed in a display area (120), the touch electrodes (510) including edge touch electrodes (TE1) disposed at edges of the display area (120) and center touch electrodes (TE2) disposed inside the display area (120) and surrounded by other touch electrodes;
a touch sensing unit (600) configured to supply a common voltage to the plurality of touch electrodes (510) during an image display period (D) and supply a touch signal (TS) to the plurality of touch electrodes (510) during a touch sensing period (T) to determine whether the panel (500) is touched; and
a touch assistance signal supply unit (700) configured to supply a touch assistance signal (TAS) to a touch assistance line (800) during the touch sensing period (T), the touch assistance signal (TAS) having the same phase and potential difference as a phase and a potential difference of the touch signal (TS) supplied to the plurality of touch electrodes (510) during a touch sensing period (T), the touch assistance line (800) being disposed in a non-display area (110) outside the display area.

2. The display device of claim 1, wherein
the display device further comprises an electrostatic discharge (ESD) line (900) for preventing static electricity that is disposed in the non-display area (120), and
the touch assistance line (800) is disposed between the electrostatic discharge (ESD) line (900) and the display area (120).

3. The display device of claim 1, wherein
the touch assistance line (800) is configured as one of a common voltage supply line supplying the common voltage to touch electrodes (510)) during the image display period (D), a gate low voltage supply line supplying a gate low voltage, a gate high voltage supply line supplying a gate high voltage, an electrostatic discharge (ESD) line disposed for preventing static electricity, and a line which is independently provided in the non-display area and receives only the touch assistance signal (TAS) during the touch sensing period (T).

4. The display device of any one of claims 1 to 3, wherein, during the touch sensing period (T), the touch assistance signal (TAS) having the same phase and potential difference as the phase and potential difference of the touch signal (TS) is supplied to a plurality of gate lines (GL1 to GLg) and a plurality of data lines (DL1 to DLd) which are disposed in the panel (100).

5. The display device of any one of claims 1 to 3, further comprising a gate driver (200) and a data driver (300), wherein,
the gate driver (200) is configured to sequentially supply a gate pulse to a plurality of gate lines (GL1 to GLg) disposed in the panel (100) during the image display period (D), and to receive the touch assistance signal (TAS) from the touch assistance signal supply unit (700) and supply the touch assistance signal (TAS) to the plurality of gate lines (GL1 to GLg) during the touch sensing period (T), and
the data driver (300) is configured to respectively supply data voltages to a plurality of data lines (DL1 to DLd) disposed in the panel (100) during the image display period (D), and to receive the touch assistance signal (TAS) from the touch assistance signal supply unit (700) and supply the touch assistance signal (TAS) to the plurality of data lines (DL1 to DLd) during the touch sensing period (T).

6. The display device of any one of claims 1 to 5, wherein a level of a direct current (DC) voltage which is supplied to the touch assistance line (800) during the image display period (D) is the same as a level of a common voltage which is supplied to the touch electrodes (510) during the image display period (D).

7. The display device of any one of claims 1 to 6, wherein a low level, a high level, and a phase of the touch assistance signal (TAS) which is supplied to the touch assistance line (800) during the touch sensing period (T) are the same as a low level, a high level, and a phase of the touch signal (TS) which is supplied to the touch electrodes (510) during the touch sensing period (T).

8. The display device of any one of claims 1 to 7, wherein the touch assistance line (800) surrounds the display area (120).

9. A method of driving a display device, the method comprising:
during an image display period (D), supplying a common voltage to a plurality of touch electrodes (510) disposed in a display area (120) of a panel (100) to display an image in the panel (100), the touch electrodes (510) including edge touch electrodes (TE1) disposed at edges of the display area (120) and center touch electrodes (TE2) disposed inside the display area (120) and surrounded by other touch electrodes; and
during a touch sensing period (T), supplying a touch signal (TS) to the plurality of touch electrodes (510) and supplying a touch assistance signal (TAS), having the same phase and potential difference as a phase and a potential difference of the touch signal (TS), to a touch assistance line (800), disposed in a non-display area (110) outside the display area (120), and a plurality of gate lines (GL1 to GLg) and a plurality of data lines (DL1 to DLd) which are included in the panel (100).

10. The method of claim 9, wherein,
during the image display period (D), one of the common voltage, a gate low voltage of a gate pulse supplied to the plurality of gate lines (GL1 to GLg), a gate high voltage of the gate pulse, an electrostatic discharge (ESD) signal, and a signal which is the same as the common voltage is supplied to the touch assistance line (800).

## Patentansprüche

1. Eine Anzeigevorrichtung aufweisend:
ein Panel (100), in welchem eine Mehrzahl von Berührungselektroden (510) in einem Anzeigebereich (120) angeordnet ist, wobei die Berührungselektroden (510) Rand-Berührungselektroden (TE1) aufweisen, die an Rändern des Anzeigebereichs (120) angeordnet sind, und Zentrum-Berührungselektroden (TE2), die innerhalb des Anzeigebereichs (120) angeordnet sind und von anderen Berührungselektroden umgeben sind,
eine Berührungserfassungseinheit (600), die konfiguriert ist zum Bereitstellen einer gemeinsamen Spannung an die Mehrzahl von Berührungselektroden (510), während einer Bild-Anzeigeperiode (D), und zum Bereitstellen eines Berührungssignals (TS) an die Mehrzahl von Berührungselektroden (510) während einer Berührungserfassungsperiode (T), um zu ermitteln, ob das Panel (500) berührt wird, und
eine Berührungsunterstützungssignal-Versorgungseinheit (700), welche konfiguriert ist, um während der Berührungserfassungsperiode (T) ein Berührungsunterstützungssignal (TAS) an eine Berührungsunterstützungsleitung (800) bereitzustellen, wobei das Berührungsunterstützungssignal (TAS) eine Phase und Potentialdifferenz hat, die dieselben sind wie eine Phase und Potentialdifferenz des Berührungssignals (TS), das während einer Berührungserfassungsperiode (T) an die Mehrzahl von Berührungselektroden (510) bereitgestellt wird, wobei die Berührungsunterstützungsleitung (800) in einem Nicht-Anzeigebereich (110) außerhalb des Anzeigebereichs angeordnet ist.

2. Die Anzeigevorrichtung gemäß Anspruch 1, wobei
die Anzeigevorrichtung ferner aufweist eine Elektrostatische-Entladung (ESD)-Leitung (900) zum Verhindern statischer Elektrizität, die in dem Nicht-Anzeigebereich (120) angeordnet ist, und
die Berührungsunterstützungsleitung (800) zwischen der Elektrostatische-Entladung (ESD)-Leitung (900) und dem Anzeigebereich (120) angeordnet ist.

3. Die Anzeigevorrichtung gemäß Anspruch 1, wobei
die Beriihrungsunterstützungsleitung (800) konfiguriert ist als eine von einer Gemeinsame-Spannung-Versorgungsleitung, welche die gemeinsame Spannung während der Bild-Anzeigeperiode (D) an die Berührungselektroden (510) bereitstellt, einer Niedrige-Gate-Spannung-Versorgungsleitung, die eine niedrige Gate-Spannung bereitstellt, einer Hohe-Gate-Spannung-Versorgungsleitung, die eine hohe Gate-Spannung bereitstellt, einer Elektrostatische-Entladung (ESD)-Leitung, die zum Verhindern statischer Elektrizität angeordnet ist, und einer Leitung, die unabhängig in dem Nicht-Anzeigebereich bereitgestellt ist und während der Berührungserfassungsperiode (T) nur das Berührungsunterstützungssignal (TAS) empfängt.

4. Die Anzeigevorrichtung gemäß irgendeinem der Ansprüche 1 bis 3, wobei, während der Berührungserfassungsperiode (T), das Berührungsunterstützungssignal (TAS), welches eine Phase und Potentialdifferenz hat, die dieselben sind wie die Phase und Potentialdifferenz des Berührungssignals (TS), bereitgestellt ist an eine Mehrzahl von Gate-Leitungen (GL1 bis GLg) und eine Mehrzahl von Datenleitungen (DL1 bis DLd), die in dem Panel (100) angeordnet sind.

5. Die Anzeigevorrichtung gemäß irgendeinem der Ansprüche 1 bis 3, ferner aufweisend einen Gate-Treiber (200) und einen Datentreiber (300), wobei
der Gate-Treiber (200) konfiguriert ist zum sequentiellen Bereitstellen eines Gate-Pulses an eine Mehrzahl von Gate-Leitungen (GL1 bis GLg), die in dem Panel (100) angeordnet sind, während der Bild-Anzeigeperiode (D), und zum Empfangen des Berührungsunterstützungssignals (TAS) von der Berührungsunterstützungssignal-Versorgungseinheit (700) und Bereitstellen des Berührungsunterstützungssignals (TAS) an die Mehrzahl von Gate-Leitungen (GL1 bis GLg) während der Berührungserfassungsperiode (T), und
der Datentreiber (300) konfiguriert ist zum entsprechenden Bereitstellen von Datenspannungen an eine Mehrzahl von Datenleitungen (DL1 bis DLd), die in dem Panel (100) angeordnet sind, während der Bild-Anzeigeperiode (D), und zum Empfangen des Berührungsunterstützungssignals (TAS) von der Berührungsunterstützungssignal-Versorgungseinheit (700) und Bereitstellen des Berührungsunterstützungssignals (TAS) an die Mehrzahl von Datenleitungen (DL1 bis DLd) während der Berührungserfassungsperiode (T).

6. Die Anzeigevorrichtung gemäß irgendeinem der Ansprüche 1 bis 5, wobei ein Level einer Gleichstrom (DC)-Spannung, die während der Bild-Anzeigeperiode (D) an die Berührungsunterstützungsleitung (800) bereitgestellt wird, gleich einem Level einer gemeinsamen Spannung ist, die während der Bild-Anzeigeperiode (D) an die Berührungselektroden (510) bereitgestellt wird.

7. Die Anzeigevorrichtung gemäß irgendeinem der Ansprüche 1 bis 6, wobei ein niedriges Level, ein hohes Level und eine Phase des Berührungsunterstützungssignals (TAS), welches während der Berührungserfassungsperiode (T) an die Berührungsunterstützungsleitung (800) bereitgestellt ist, gleich einem niedrigen Level, einem hohen Level und einer Phase des Berührungssignals (TS) sind, das während der Berührungserfassungsperiode (T) an die Berührungselektroden (510) bereitgestellt wird.

8. Die Anzeigevorrichtung gemäß irgendeinem der Ansprüche 1 bis 7, wobei die Berührungsunterstützungsleitung (800) den Anzeigebereich (120) umgibt.

9. Ein Verfahren zum Betreiben einer Anzeigevorrichtung, wobei das Verfahren aufweiset:
während einer Bild-Anzeigeperiode (D), Bereitstellen einer gemeinsamen Spannung an eine Mehrzahl von Berührungselektroden (510), die in einem Anzeigebereich (120) eines Panels (100) angeordnet sind, um ein Bild in dem Panel (100) anzuzeigen, wobei die Berührungselektroden (510) Rand-Berührungselektroden (TE1) aufweisen, die an Rändern des Anzeigebereichs (120) angeordnet sind, und Zentrum-Berührungselektroden (TE2), die innerhalb des Anzeigebereichs (120) angeordnet sind und von anderen Berührungselektroden umgeben sind, und,
während einer Berührungserfassungsperiode (T), Bereitstellen eines Berührungssignals (TS) an die Mehrzahl von Berührungselektroden (510) und Bereitstellen eines Berührungsunterstützungssignals (TAS), dessen Phase und Potentialdifferenz dieselben sind wie die Phase und Potentialdifferenz des Berührungssignals (TS), an eine Berührungsunterstützungsleitung (800), die in einem Nicht-Anzeigebereich (110) außerhalb des Anzeigebereichs (120) angeordnet ist, und eine Mehrzahl von Gate-Leitungen (GL1 bis GLg) und eine Mehrzahl von Datenleitungen (DL1 bis DLd), welche in dem Panel (100) enthalten sind.

10. Das Verfahren gemäß Anspruch 9, wobei,
während der Bild-Anzeigeperiode (D), eine von der gemeinsamen Spannung, einer niedrigen Gate-Spannung eines Gate-Pulses, der an die Mehrzahl von Gate-Leitungen (GL1 bis GLg) bereitgestellt wird, einer hohen Gate-Spannung des Gate-Pulses, einem Elektrostatische-Entladung (ESD)-Signal und einem Signal, welches gleich der gemeinsamen Spannung ist, an die Berührungsunterstützungsleitung (800) bereitgestellt wird.

## Revendications

1. Dispositif d'affichage comprenant :
un panneau (100) dans lequel une pluralité d'électrodes de contact (510) sont disposées dans une zone d'affichage (120), les électrodes de contact (510) comprenant des électrodes de contact de bord (TE1) disposées au niveau des bords de la zone d'affichage (120) et des électrodes de contact centrales (TE2) disposées à l'intérieur de la zone d'affichage (120) et entourées par d'autres électrodes de contact ;
une unité de détection de contact (600) conçue pour alimenter en tension commune la pluralité d'électrodes de contact (510) pendant une période d'affichage d'image (D) et introduire un signal de contact (TS) dans la pluralité d'électrodes de contact (510) pendant une période de détection de contact (T) pour déterminer si le panneau (500) est touché ; et
une unité d'introduction de signal d'assistance de contact (700) conçue pour introduire un signal d'assistance de contact (TAS) dans une ligne d'assistance de contact (800) pendant la période de détection de contact (T), le signal d'assistance de contact (TAS) ayant la même phase et la même différence de potentiel qu'une phase et une différence de potentiel du signal de contact (TS) introduit dans la pluralité d'électrodes de contact (510) pendant une période de détection de contact (T), la ligne d'assistance de contact (800) étant disposée dans une zone de non-affichage (110) à l'extérieur de la zone d'affichage.

2. Dispositif d'affichage selon la revendication 1, dans lequel
le dispositif d'affichage comprend en outre une ligne de décharge électrostatique (ESD) (900) pour empêcher l'électricité statique qui est disposée dans la zone de non-affichage (120) et
la ligne d'assistance de contact (800) est disposée entre la ligne de décharge électrostatique (ESD) (900) et la zone d'affichage (120).

3. Dispositif d'affichage selon la revendication 1, dans lequel
la ligne d'assistance de contact (800) est conçue comme une parmi une ligne d'alimentation en tension commune alimentant en une tension commune les électrodes de contact (510) pendant la période d'affichage d'image (D), une ligne d'alimentation en basse tension de grille alimentant une basse tension de grille, une ligne d'alimentation de haute tension de grille alimentant une haute tension de grille, une ligne de décharge électrostatique (ESD) disposée pour empêcher l'électricité statique et une ligne qui est disposée indépendamment dans la zone de non-affichage et qui reçoit uniquement le signal d'assistance de contact (TAS) pendant la période de détection de contact (T).

4. Dispositif d'affichage selon l'une des revendications 1 à 3, dans lequel, pendant la période de détection de contact (T), le signal d'assistance de contact (TAS) ayant la même phase et la même différence de potentiel que la phase et la différence de potentiel du signal de contact (TS) est introduit dans une pluralité de lignes de grilles (GL1 à Glg) et une pluralité de lignes de données (DL1 à Dld) qui sont disposées dans le panneau (100).

5. Dispositif d'affichage selon l'une des revendications 1 à 3, comprenant en outre une commande de grille (200) et un pilote de données (300), dans lequel
la commande de grille (200) est conçue pour introduire de manière séquentielle une impulsion de grille dans une pluralité de lignes de grilles (GL1 à Glg) disposées dans le panneau (100) pendant la période d'affichage d'image (D) et pour recevoir le signal d'assistance de contact (TAS) provenant de l'unité d'alimentation de signal d'assistance de contact (700) et introduire le signal d'assistance de contact (TAS) dans la pluralité de lignes de grilles (GL1 à Glg) pendant la période de détection de contact (T) et
le pilote de données (300) est conçu pour introduire respectivement des tensions de données dans une pluralité de lignes de données (DL1 à Dld) disposées dans le panneau (100) pendant la période d'affichage d'image (D), et pour recevoir le signal d'assistance de contact (TAS) provenant de l'unité d'alimentation de signal d'assistance de contact (700) et introduire le signal d'assistance de contact (TAS) dans la pluralité de lignes de données (DL1 à Dld) pendant la période de détection de contact (T).

6. Dispositif d'affichage selon l'une quelconque des revendications 1 à 5, dans lequel un niveau d'une tension de courant continu (DC) qui est introduite dans la ligne d'assistance de contact (800) pendant la période d'affichage d'image (D) est le même qu'un niveau d'une tension commune qui est introduite dans les électrodes de contact (510) pendant la période d'affichage d'image (D).

7. Dispositif d'affichage selon l'une des revendications 1 à 6, dans lequel un niveau bas, un niveau haut et une phase du signal d'assistance de contact (TAS) qui est introduit dans la ligne d'assistance de contact (800) pendant la période de détection de contact (T) sont les mêmes qu'un niveau bas, un niveau haut et une phase du signal de contact (TS) qui est introduit dans les électrodes de contact (510) pendant la période de détection de contact (T).

8. Dispositif d'affichage selon l'une quelconque des revendications 1 à 7, dans lequel la ligne d'assistance de contact (800) entoure la zone d'affichage (120).

9. Procédé de commande d'un dispositif d'affichage, ce procédé comprenant :
pendant une période d'affichage d'image (D), introduction d'une tension commune dans une pluralité d'électrodes de contact (510) disposées dans une zone d'affichage (120) d'un panneau (100) pour afficher une image dans le panneau (100), les électrodes de contact (510) comprenant des électrodes de contact de bord (TE1) disposées au niveau des bords de la zone d'affichage (120) et des électrodes de contact centrales (TE2) disposées à l'intérieur de la zone d'affichage (120) et entourées par d'autres électrodes de contact ; et
pendant une période de détection de contact (T), introduction d'un signal de contact (TS) dans la pluralité d'électrodes de contact (510) et introduction d'un signal d'assistance de contact (TAS), ayant la même phase et la même différence de potentiel qu'une phase et une différence de potentiel du signal de contact (TS), dans une ligne d'assistance de contact (800), disposée dans une zone de non-affichage (110) à l'extérieur de la zone d'affichage (120) et une pluralité de lignes de grilles (GL1 à Glg) et une pluralité de lignes de données (DL1 à Dld) qui sont comprises dans le panneau (100).

10. Procédé selon la revendication 9, dans lequel
pendant la période d'affichage d'image (D), un parmi la tension commune, une basse tension de grille d'une impulsion de grille introduite dans la pluralité de lignes de grilles (GL1 à Glg), une haute tension de grille de l'impulsion de grille, un signal de décharge électrostatique (ESD) et un signal qui est le même que la tension commune est introduit dans la ligne d'assistance de contact (800).
